# EUROPÄISCHE PATENTSCHRIFT

(11) **EP 1 181 841 B1**
(45) Veröffentlichungstag und Bekanntmachung des Hinweises auf die Patenterteilung: **05.03.2003**
(21) Anmeldenummer: 99938140.3
(22) Anmeldetag: 31.05.1999
(51) Int. Cl.: H05B 7/07

(54) **VERFAHREN ZUR ERMITTLUNG VON ELEKTRODENLÄNGE UND BADHÖHE IM ELEKTROLICHTBOGENOFEN**
METHOD OF DETERMINING ELECTRODE LENGTH AND BATH LEVEL IN AN ELECTRIC ARC FURNACE
PROCEDE POUR DETERMINER UNE LONGUEUR D'ELECTRODE ET UNE HAUTEUR DE BAIN DANS UN FOUR A ARC

(43) Veröffentlichungstag der Anmeldung: 27.02.2002
(73) Patentinhaber: Stahlwerk Thüringen GmbH, 07333 Unterwellenborn (DE)
(72) Erfinder: KLEINGÄRTNER, Peter, D-07333 Unterwellenborn (DE); GRIESBACH, Bernd, D-07333 Unterwellenborn (DE)
(74) Vertreter: Bernhardt, Winfrid, Dr.-Ing.
(86) Internationale Anmeldenummer: DE9901669
(87) Internationale Veröffentlichungsnummer: WO00074442

(56) Entgegenhaltungen:
- US-A- 3 614 284
- US-A- 5 590 151

## Beschreibung

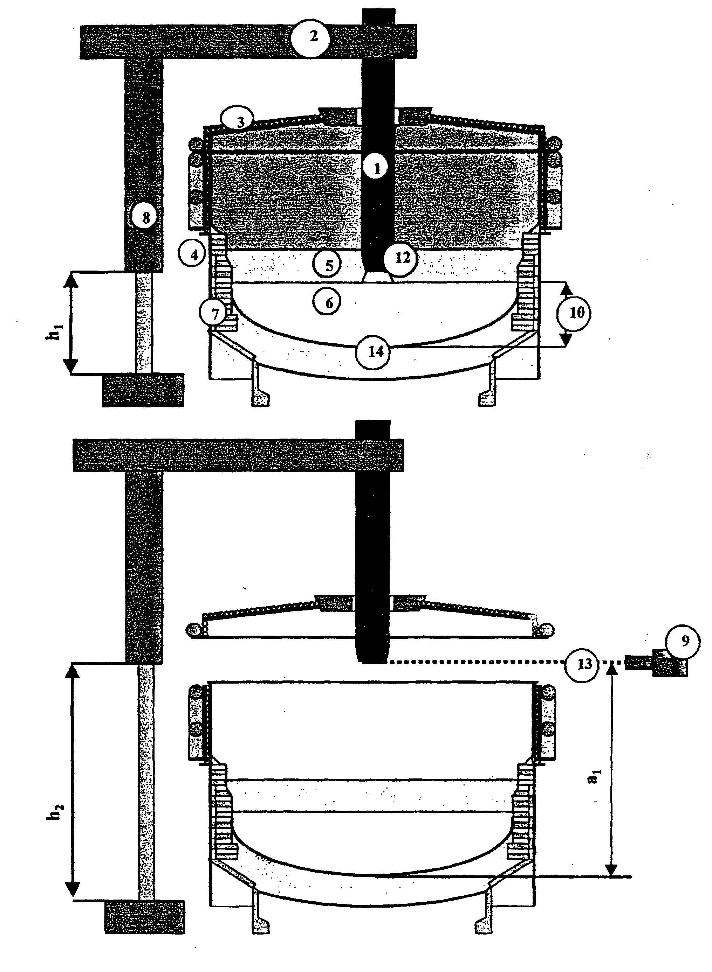

Der gegenwärtige Stand der Technik (vgl. dazu US-A-3 614 284 und US-A-5 590 151) ist dadurch geprägt, daß in Elektrolichtbogenöfen während der Schmelze nicht ausreichend genau bekannt ist, in welcher Höhe sich die Elektrodenspitze zum jeweiligen Zeitpunkt befindet. Des weiteren ist die Höhe des Stahlbadspiegels am Ende einer Schmelze ebenfalls nicht hinreichend genau bekannt.
Dies resultiert unter anderem aus verschiedenen Elektrodenlängen, unterschiedlichen Einspannhöhen und unterschiedlichem Elektrodenverbrauch. Der Erfindung lag daher die Aufgabe zugrunde, ein Verfahren zu entwickeln, mit welchem diese vorbeschriebenen Nachteile weitestgehendst minimiert werden können.
Dies wird mit der Durchführung von 2 speziellen Längenmessungen mit anschließender Bewertung der Meßergebnisse zum Zweck der ständigen Ermittlung des Abstandes zwischen Elektrodenspitze (12) und Badhöhe (6) der vorhergehenden Schmelze im Elektrolichtbogenofen erreicht. In den Figuren 1 und 2 ist dieses Verfahren schematisch dargestellt.
Die erste Messung erfolgt gegen Ende einer jeden Schmelze. Durch geeignete Beeinflussung der Regelungsgrößen für Ofenspannung und Ofenstrom bewegt sich die Elektrodenspitze (12) in Richtung Stahlbad (6). Bei Erreichen eines vorgeschriebenen Abbruchkriteriums wird der Istwert (h₁) des Längenmeßsystems Elektrodenhub (11) gespeichert und der Meßvorgang beendet. Das Abbruchkriterium ist definiert durch ein sich bei jeder Messung identisch einstellendes Signalverhalten der Regelungsgrößen für Ofenspannung und Ofenstrom. Der Abstand der Elektrodenspitze (12) zur Badhöhe (10) ist somit bei jeder Messung annähernd konstant.

Die zweite Messung erfolgt bei in Figur 2 dargestelltem ausgeschwenktem Ofendeckel(3).DieElektrodenspitze (12) wird durch eine geeignete Automatik auf einen bekannten fixen Abstandswert (a₁) zum Bezugspunkt (14) der Badhöhe (10) gefahren. Dieser fixe Abstandswert ist definiert durch den horizontalen Strahlgang (13) eines optischen Meßsystems (9), z. B. eines Pyrometers. Sobald die Elektrodenspitze (12) den Strahlgang (13) des optischen Meßsystems (9) unterbrochen hat, erfolgt das Heben der Elektrode (1). Bei freiwerdendem Strahlgang (13) wird der Istwert (h₂) des Längenmeßsystems Elektrodenhub (11) gespeichert.
Die Berechnung der Badhöhe (10) erfolgt nach der Gleichung:
Badhöhe = a₁-(h₂-h₁).
Die Berechnung des Abstandes zwischen Elektrodenspitze (12) und Badhöhe (10) der vorhergehenden Schmelze erfolgt nach der Gleichung:
Abstand = a₁-(h₂-Istwert LMS)-Badhöhe+Korrekturgröße Elektrodenverbrauch zwischen 2 Messungen.

Somit ist es möglich, den Elektrodenverbrauch in Zentimetern je geschmolzenem Schrottkorbinhalt und die Stahlbadhöhe am Ende einer Schmelze zu ermitteln.

Das vorgeschlagene Verfahren gemäß Anspruch 1 eignet sich für alle Elektrolichtbogenöfen, insbesondere für Gleichstromlichtbogenöfen.
Bei Einsatz des vorgeschlagenen Verfahrens an Drehstromlichtbogenöfen muß zur Durchführung der ersten Messung eine Elektrode in das Stahlbad (6) eingetaucht und mit einer zweiten Elektrode die vorbeschriebene Messung durchgeführt werden.

Das entwickelte Verfahren ermöglicht es, unter der Bedingung, daß das Abstichgewicht genau bestimmt werden kann, exakte Aussagen über technologische Kennziffern, bezogen auf die jeweilige Schmelze, in einem Sumpfofen zu treffen.

Es sind somit unter anderem folgende Aussagen, bezogen auf die jeweilige Schmelze, möglich:
- Elektroenergieverbrauch pro wirklich geschmolzener Tonne Schrott
- Restsumpfmenge im Ofen nach dem Abstich
- exakter Elektrodenverbrauch.

Vorgenannte Aussagen und die Kenntnis darüber, in welcher Höhe sich die Elektrodenspitze zu jedem Zeitpunkt im Ofen befindet, ermöglicht es, den Prozeß weitgehend zu analysieren, zu optimieren, zu automatisieren bzw. zu steuern.
Es werden somit unter anderem folgende Optimierungen und Automatisierungen möglich:
- Optimierung und Automatisierung der Einschmelzphasen
- Optimierung und Automatisierung der Überhitzungsphase unter Einbeziehung der Feldstärke
- Optimierung der Sumpfmenge mit dem Ziel minimaler Energieverbräuche bei maximalem Ausbringen
- Minimierung des Feuerfestverbrauches
- Minimierung des Anteils Mitlaufschlacke beim Abstich zur Verbesserung der metallurgischen Arbeit während der Pfannenbehandlung insbesondere der Entschwefelung.

### Bezugszeichenliste

- 1 -: Elektrode
- 2 -: Elektrodenarm
- 3 -: Ofendeckel
- 4 -: Ofengefäß
- 5 -: Schlacke
- 6 -: Stahlbad
- 7 -: Feuerfestauskleidung
- 8 -: Elektrodenhubzylinder
- 9 -: optisches Meßsystem
- 10 -: Badhöhe
- 11 -: Längenmeßsystem Elektrodenhub (LMSEH)
- 12 -: Elektrodenspitze
- 13 -: Strahlgang des optischen Meßsystems
- 14 -: Bezugspunkt

- h₁ -: gespeicherter Istwert LMSEH bei 1. Messung
- h₂ -: gespeicherter Istwert LMSEH bei 2. Messung

- a₁ -: vertikaler Abstand zwischen Bezugspunkt Badhöhe und Strahlgang des optischen Meßsystems

## Patentansprüche

1. Verfahren zur ständigen Ermittlung des Abstandes zwischen Elektrodenspitze (12) und Badhöhe (10) der vorhergehenden Schmelze in Elektrolichtbogenöfen
**dadurch gekennzeichnet,**
**daß** mit einer ersten Messung am Ende einer jeden Schmelze ein spezieller Istwert (h₁) eines Längenmeßsystems Elektrodenhub (11) und mit einer zweiten Messung der Abstand zwischen Elektrodenspitze (12) und einem Bezugspunkt (14) der Badhöhe ermittelt und gespeichert wird, wobei die erste Messung am Ende einer jeden Schmelze in der Weise durchgeführt wird, daß bei Erreichen eines vorgeschriebenen Abbruchkriteriums bei sich in Richtung Stahlbad (6) bewegender Elektrodenspitze (12) der Istwert (h₁) des Längenmeßsystems Elektrodenhub (11) festgestellt und gespeichert wird und wobei bei der zweiten Messung der Istwert (h₂) des Längenmeßsystems Elektrodenhub (11) dann ermittelt und gespeichert wird, sobald die Elektrodenspitze (12) den horizontalen, auf einem bekannten fixen Abstand (a₁) zum Bezugspunkt (14) der Badhöhe (10) verlaufenden Strahlgang (13) eines optischen Meßsystems (9) beim Durchfahren unterbrochen hat.

2. Verfahren zur ständigen Ermittlung des Abstandes zwischen Elektrodenspitze (12) und Badhöhe (10) der vorhergehenden Schmelze in Elektrolichtbogenöfen gemäß Anspruch 1
**dadurch gekennzeichnet,**
**daß** bei Einsatz des Meßverfahrens an Drehstromlichtbogenöfen zur Durchführung der ersten Messung eine Elektrode in das Stahlbad (6) eingetaucht und mit einer zweiten Elektrode die Messung durchgeführt wird.

## Claims

1. The procedure to continuously determine the clearance between the tip of the electrode (12) and the height of the bath (10) for the preceding melting procedure in the electric arc furnace is designated as that which generates a specific actual value (h₁) for the electrode stroke (11) longitudinal measuring system via an **initial** measurement at the end of every melting procedure A **second** measurement of the clearance between the tip of the electrode (12) and a reference point (14) determines and stores the height of the bath, whereby the **initial** measurement taken at the end of every melting procedure and carried out in this manner determines and stores the special actual value (h₁) for the electrode stroke (11) longitudinal measuring system when the moving tip of the electrode (12) reaches the stipulated break-off criteria whilst moving in the direction of the steel bath (6).
The **second** measurement then generates and stores the special actual value (h₂) for the electrode stroke (11) longitudinal measuring system as soon as the tip of the electrode (12) interrupts the continuous beam (13) generated by an optical measuring system which runs horizontally at a known fixed distance (a₁) from the reference point (14) for the bath height (10).

2. The procedure to continuously determine the clearance between the tip of the electrode (12) and the height of the bath (10) for the preceding melting procedure in the electric arc furnace in accordance with Claim 1 is designated as that which uses the measuring process in conjunction with a three phase AC arc furnace for implementing the initial measurement and that an electrode must be immersed in the steel bath (6) and the second electrode then executes the actual measurement.

## Revendications

1. Procédé pour le calcul continu de la distance entre la pointe d'électrode (12) et la hauteur de bain (10) de la charge précédente dans des fours à arc électrique
**caractérisé**
**en ce que**, avec une **première** mesure effectuée à la fin de chaque charge, on détermine et on mémorise une valeur réelle (h₁) spéciale d'un système de mesure de longueur course d'électrode (11) et avec une **deuxième** mesure la distance entre la pointe d'électrode (12) et un point de référence (14) de la hauteur de bain, **la première** mesure étant effectuée à la fin de chaque charge de façon que, lorsqu'on atteint un critère d'interruption prescrit avec la pointe d'électrode (12) qui se déplace en direction du bain d'acier (6), la valeur réelle (h₁) du système de mesure de longueur course d'électrode (11) est déterminée et mémorisée et moyennant quoi, lors de la **deuxième** mesure, la valeur réelle (h₂) du système de mesure de longueur course d'électrode (11) est déterminée et mémorisée dès que la pointe d'électrode (12) a interrompu la trajectoire de faisceau (13), horizontale et disposée à une distance (a₁) fixe connue par rapport au point de référence (14) de la hauteur de bain (10), d'un système de mesure optique (9) lors du passage.

2. Procédé pour le calcul continu de la distance entre la pointe d'électrode (12) et la hauteur de bain (10) de la charge précédente dans des fours à arc électriques selon la revendication 1
**caractérisé**
**en ce que**, si l'on utilise le procédé de mesure sur des fours à arc électrique à courant triphasé pour effectuer la première mesure, on plonge une électrode dans le bain d'acier (6) et on effectue la mesure avec une deuxième électrode.
